(19) Europäisches Patentamt
European Patent Office
Office européen des brevets

(11) **EP 3 361 051 B1**

(12) **EUROPEAN PATENT SPECIFICATION**

(45) Date of publication and mention
of the grant of the patent:
**04.09.2019 Bulletin 2019/36**

(51) Int Cl.:
**F01D 5/14** *(2006.01)*          **F04D 29/32** *(2006.01)*

(21) Application number: **18151671.7**

(22) Date of filing: **15.01.2018**

(54) **GAS TURBINE ENGINE FAN BLADE WITH AXIAL LEAN**

GASTURBINENMOTOR-GEBLÄSESCHAUFEL MIT AXIALER NEIGUNG

AUBE DE VENTILATEUR DE TURBINE À GAZ À INCLINAISON AXIALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.02.2017 GB 201702383**

(43) Date of publication of application:
**15.08.2018 Bulletin 2018/33**

(73) Proprietor: **Rolls-Royce plc**
**London SW1E 6AT (GB)**

(72) Inventors:
• **Wilson, Mark**
 **Derby, Derbyshire DE24 8BJ (GB)**
• **Gonzalez-Gutierrez, Gabriel**
 **Derby, Derbyshire DE24 8BJ (GB)**
• **Barale, Marco**
 **Derby, Derbyshire DE24 8BJ (GB)**
• **Phelps, Benedict**
 **Derby, Derbyshire DE24 8BJ (GB)**
• **Johal, Kashmir**
 **Derby, Derbyshire DE24 8BJ (GB)**
• **Smith, Nigel**
 **Derby, Derbyshire DE24 8BJ (GB)**

(74) Representative: **Rolls-Royce plc**
**Intellectual Property Dept SinA-48**
**PO Box 31**
**Derby DE24 8BJ (GB)**

(56) References cited:
EP-A1- 2 037 126          EP-A2- 2 543 818
WO-A1-2005/088135       WO-A1-2013/150243
US-A- 6 071 077

**Description**

This disclosure relates to a fan blade for a gas turbine engine, a fan stage comprising at least one such fan blade, and a gas turbine engine comprising such a fan stage.

Modern gas turbine aero-engines typically comprise a fan, which compresses the incoming air and directs at least a portion of that air along a bypass duct, with the remainder of the air flowing through the engine core. The fan must be able to operate in a range of conditions, for example without stalling.

Modern large gas turbine engines are being designed to have lower specific thrust and higher fan tip loading than their predecessors. This may be achieved by driving the fan via a gearbox in order to reduce the rotational speed of the fan. Lower specific thrust and/or lower rotational speed and/or higher tip loading may be beneficial from an efficiency perspective, but may present significant operability challenges.

For example, as the cruise and sea level working lines separate at lower pressure ratios, the challenge to have sufficient stall (and flutter) margins relative to the sea level static (SLS) working line, and acceptable cruise working line efficiency becomes more difficult.

Accordingly, the design of modern turbofan gas turbine engines tends to decrease their operability range.

Accordingly, it would be desirable to be able to reduce increase the operability range of a gas turbine engine, for example to decrease its susceptibility to stall.

WO 2013/150243 relates to a turbomachine rotor blade including a blade root and a blade tip spaced apart by a blade height, including at least one intermediate segment between the blade root and the blade tip that presents forward sweep over at least 50% of the blade height, and a distal segment with backward sweep between the intermediate segment and the blade tip, the distal segment also presenting a positive tangential angle of inclination.

US 6071077 relates to a swept fan blade design having a leading edge swept forward near the hub up to a first radial height, then rearward up to a second radial height and finally swept forward again up to the blade tip.

EP 2 543 818 relates to a gas turbine engine having propulsor blades in which a leading edge has a swept profile such that, at the design speed, a component of a relative velocity vector of a working gas that is normal to the leading edge is subsonic along the entire radial span.

WO 2005/088135 relates to a high pressure compressor blade of a gas turbine engine having a blades that are slanted at a sweep angle that changes with the height of the respective blade in such a manner that the leading edges comprise, in a radially external area of the same, at least one forward sweep angle, a backward sweep angle or zero-sweep angle following in a radially external manner, and a forward sweep angle following, in a radially external manner, the backward sweep angle or the zero sweep angle.

EP 2 037 126 relates to a hub side of the fan stage that has a longer chord length than at the mid span and tip side. The radius at the root of the hub-side leading edge is set in a boss ratio of 0 to 0.4.

According to an aspect, there is provided a fan stage for a gas turbine engine, according to claim 1.

The term "axially forward" may mean the same axial direction as the axial component of the direction from the trailing edge of the blade to the leading edge of the blade. The fan stage may rotate about the axial direction in use. The term "fan stage" may refer only to rotating components, for example comprising the hub and blades. Alternatively, the term "fan stage" may also comprise other components, including non-rotating components such as guide vanes immediately downstream of the fan blades.

Where reference is made to the axial, radial and circumferential directions, the skilled person will readily understand this to mean the conventional directions when the fan blade is assembled as part of a fan stage or is provided in a gas turbine engine. Viewing the blade along a circumferential direction may mean viewing the blade in side profile and/or in the meridional plane and/or projected onto a plane defined by the axial and radial directions.

Arrangements such as those described and/or claimed herein may reduce the radial pressure gradient (for example in the radially outer half and/or towards the tip) of the aerofoil during operation, for example on high working lines. This may provide a greater operability range and/or reduce the tendency of the blade to stall.

Optionally, for any two points on the leading edge of the fan blade that are radially closer to the tip than to the root and are radially separated by at least 5% of the blade span, the radially outer of the two points may be axially forward of the radially inner point.

Optionally, for any two points on the leading edge of the fan blade that are in the radially outer 40% of the blade span and have a difference in radius of at least 2% of the blade span, the radially outer of the two points may be axially forward of the radially inner point.

Optionally, for any two points on the leading edge of the fan blade that are radially closer to the tip than to the root and have a difference in radius of at least 2% of the blade span, the radially outer of the two points may be axially forward of the radially inner point.

The hub may be, or may comprise, a fan disc and/or may be driven by a shaft. The shaft itself may be driven by a turbine of a gas turbine engine. As used herein, in the term "hub to tip ratio", the hub may refer to the part of the hub that is facing outwards, so as to form the gas-washed surface in use, in accordance with conventional use of the term.

For any two points on the leading edge of a fan blade that are radially closer to the tip than to the root and have a difference in radius of at least 1%, for example at least 2%, for example at least 3%, for example at least 4% of the blade span, the radially outer of the two points may axially forward of the radially inner point.

For any two points on the leading edge of a fan blade that are radially separated by at least 5% of the blade span, the radially outer of the two points may be axially forward of the radially inner point, for example regardless of the absolute radial position of the two points. Thus, in some arrangements, for any two points on the leading edge of a fan blade that are radially closer to the root than to the tip and are radially separated by at least 5% of the blade span, the radially outer of the two points may be axially forward of the radially inner point. In other arrangements, for any two points on the leading edge of a fan blade that are radially closer to the root than to the tip and are radially separated by at least 5% of the blade span, the radially outer of the two points may not be axially forward of the radially inner point, for example it may be axially rearward of or axially aligned with the radially inner point.

When viewed along a circumferential direction, the angle formed between the radial direction and a line drawn between any of the two points on the leading edge referred to herein is in the range of from -6°and 0°, for example in the range of from -5°and -0.25°, for example - 4°and -0.5°, for example -3°and -0.75°, for example -2°and -1°, where a negative angle indicates that the respective line has an axial component that is in the same direction as the axial component of the direction from a trailing edge to the leading edge of the blade.

When viewed along a circumferential direction, the angle ($\alpha$) formed between the radial direction and a straight line (AC) drawn between the leading edge at the root and at the tip of any given fan blade is in the range of from -6°and -0.2°, for example in the range of from - 5°and -0.25°, for example -4°and -0.5°, for example -3°and -0.75°, for example -2°and -1°, where a negative angle indicates that the respective line has an axial component that is in the same direction as the axial component of the direction from a trailing edge to the leading edge of the blade.

When viewed along a circumferential direction, the maximum perpendicular distance between any point on the leading edge and a straight line drawn between the leading edge at the root and at the tip may be 5% of blade span, for example 4%, 3%, 2%, 1%, 0.5% or 0.1% of the blade span.

The fan blade may comprise a platform. The fan blade may comprise a root portion. The root portion may extend between the platform and the root of the aerofoil portion. Alternatively, the aerofoil portion may extend directly from the platform, with no intermediate root portion, such that the root of the aerofoil foil portion is the root of the fan blade. A radially outer (gas washed) surface of the platform may correspond to the radially outer (gas washed) part of the hub.

Where the fan blade comprises a root portion, the radial extent of the root portion may be no more than 15%, for example no more than 10%, 7%, 5%, 3%, 2% or 1%, of the span of the aerofoil portion, for example.

The fan blade may comprise a tip portion that extends at least radially away from the tip of the aerofoil portion. Alternatively, the fan blade may comprise no tip portion, such that the tip of the aerofoil portion is also the tip of the fan blade.

Where the fan blade comprises a tip portion, the radial extent of the tip portion may be no more than 15%, for example no more than 10%, 7%, 5%, 3%, 2% or 1%, of the span of the aerofoil portion, for example.

A stacking axis of the aerofoil portion may be defined by a line joining the centroids of all of the aerofoil segments that are stacked to form the aerofoil portion. When viewed along a circumferential direction, the stacking axis may have a forward lean. For example, the angle formed between the radial direction and a straight line drawn between the stacking axis at the root and at the tip may be in the range of from -40°and 0°, for example -30°and -1°, for example -25°and -2°, for example -20°and -3°, for example -15°and -5°, for example -10° and -6°, where a negative angle indicates that the respective line has an axial component that is in the same direction as the axial component of the direction from a trailing edge to the leading edge of the blade. By way of further example, optionally the stacking axis may have a forward (negative) lean in the radially outer half of the aerofoil portion, for example only in the radially outer half of the aerofoil portion.

The aerofoil portion may have a trailing edge extending from a root to a tip. When viewed along a circumferential direction, the trailing edge may have a forward lean. For example, the angle formed between the radial direction and a straight line drawn between the trailing edge at the root and at the tip may be in the range of from -40°and 0°, for example -30°and - 1°, for example -25°and -2.5°, for example -20° and -5°, for example -15°and -7.5°, for example around -10°, where a negative angle indicates that the respective line has an axial component that is in the same direction as the axial component of the direction from a trailing edge to the leading edge of the blade.

The trailing edge may be shaped such that the forward (negative) lean angle over a radially outer half of the trailing edge is greater, for example significantly greater, than the forward (negative) lean angle over a radially inner half of the trailing edge. For example, the forward (negative) lean angle over a radially outer half of the trailing may be at least 1.5 times, for example at least twice, for example at least 3, 4, 5, 6, 7, 8, 9 or 10 times the forward (negative) lean angle over a radially inner half of the trailing edge. In some arrangements, the trailing edge may be radial (including substantially radial) over a radially inner portion of the blade (or aerofoil portion), for example over a radially inner 10%, 20%, 30%, 40% or around 50%.

In any aspect or example of the present disclosure, the magnitude of the angle formed between the radial direction and a straight line drawn between the trailing edge at the root and at the tip may be greater than the magnitude of the angle formed between the radial direction and a straight line drawn between the leading edge at the root and at the tip. For example, the angle formed between the radial direction and a straight line drawn between the trailing edge at the root and at the tip may have a higher negative value than that of the of the angle formed between the radial direction and a straight line drawn between the leading edge at the root and at the tip. The angle formed between the radial direction and a straight line drawn between the trailing edge at the root and at the tip may be negative. The angle formed between the radial direction and a straight line drawn between the leading edge at the root and at the tip may be negative.

Any fan blade and/or aerofoil portion described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre, and/or from a metal, such as a titanium based metal or an aluminium based material (such as an Aluminium-Lithium alloy) or a steel based material.

The fan blades may be attached to the hub in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc.

By way of further example, the fan blades maybe formed integrally with a hub. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

By way of further example, the fan blades may be attached to a hub in a manner that allows their pitch to be varied.

According to an aspect, there is provided a gas turbine engine comprising at least one fan blade as described and/or claimed herein and/or a fan stage as described and/or claimed herein.

Such a gas turbine engine (which may, of course, be a turbofan gas turbine engine) may have a specific thrust of less than 15 lbf/lb/s (or approximately 150 N/Kg/s), for example less than 12 lbf/lb/s (or approximately 120 N/Kg/s), for example less than 10 lbf/lb/s (or approximately 110 N/Kg/s or 100 N/Kg/s), for example less than 9 lbf/lb/s (or approximately 90 N/Kg/s), for example less than 8.5 lbf/lb/s (or approximately 85 N/Kg/s), for example less than 8 lbf/lb/s (or approximately 80 N/Kg/s).

Any gas turbine engine described and/or claimed herein may have a fan tip loading ($dH/U_{tip}^2$) at cruise conditions of greater than 0.3, for example in the range of from 0.3 to 0.37, for example 0.32 to 0.36, for example on the order of 0.35 (all units being $JKg^{-1}K^{-1}/(ms^{-1})^2$), where dH is the enthalpy rise across the fan (for example the 1-D average enthalpy rise of the flow across the fan at cruise conditions), and $U_{tip}$ is the velocity of the tip, for example at cruise conditions, which may be calculated as the rotational speed multiplied by the tip radius at the leading edge. Cruise may be defined as the phase between the initial ascent and final descent of an aircraft to which the engine may be attached. As used herein, cruise may mean, for example, mid-cruise, i.e. mid-point (for example in terms of time and/or fuel burn) of a flight (or at least of the cruise phase of a flight).

The radius of the fan may be measured between the engine centreline and the tip of a fan blade at its leading edge. The fan diameter (which may simply be twice the radius of the fan) may be greater than 250 cm, for example greater than 260 cm, 270 cm, 280 cm, 290 cm, 300 cm, 310 cm, 320 cm, 330 cm, 340 cm or 350cm.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than 10, for example greater than 11, for example greater than 11.5, for example greater than 12, for example greater than 13, for example greater than 14, for example greater than 15. The bypass duct may be substantially annular. The bypass duct may be radially outside the core engine. The radially outer surface of the bypass duct may be defined by a nacelle and/or a fan case.

A gas turbine engine as described and/or claimed herein may have any desired maximum thrust. Purely by way of non-limitative example, a gas turbine as described and/or claimed herein may be capable of producing at least 170kN of thrust, for example at least 180kN, for example at least 190kN, for example at least 200kN, for example at least 250kN, for example at least 300kN, for example at least 350kN, for example at least 400kN. The thrust referred to above may be at standard atmospheric conditions.

Such a gas turbine engine may be of any suitable form. For example, the gas turbine engine may be an aero gas turbine engine for use on aircraft. Such an engine may be a geared turbofan gas turbine engine, in which the fan stage is driven from a turbine via a gearbox, in order to reduce (or increase) the rotational speed of the fan stage compared with the driving turbine stage(s).

The arrangements of the present disclosure may be particularly effective in addressing any operability issues presented by the use of such lower speed fans, such as those driven via a gearbox.

The input to such a gearbox may be directly from a core shaft that connects a turbine to a compressor, or indirectly from the core shaft, for example via a spur shaft and/or gear. The core shaft may rigidly connect the turbine and the compressor, such that the turbine and compressor rotate at the same speed (with the fan rotating at a lower speed).

Any number of fan stages may be provided to an engine. For example, a gas turbine engine may have a single fan stage, such that the next downstream rotor stage after the fan is a compressor rotor stage, for example a compressor rotor stage in the core of the engine.

The skilled person will appreciate that except where mutually exclusive, a feature described in relation to any one of the above aspects may be applied to any other aspect. Furthermore, except where mutually exclusive, any feature described herein may be applied to any aspect and/or combined with any other feature described herein.

Embodiments will now be described by way of example only, with reference to the Figures, in which:

Figure 1 is a sectional side view of a gas turbine engine on accordance with the present disclosure;

Figure 2 is a side view of a fan blade according to an example of the present disclosure;

Figure 3 is a close-up view of a leading edge portion of a fan blade according to an example of the present disclosure; and

Figure 4 is a side view of a fan blade according to an example of the present disclosure.

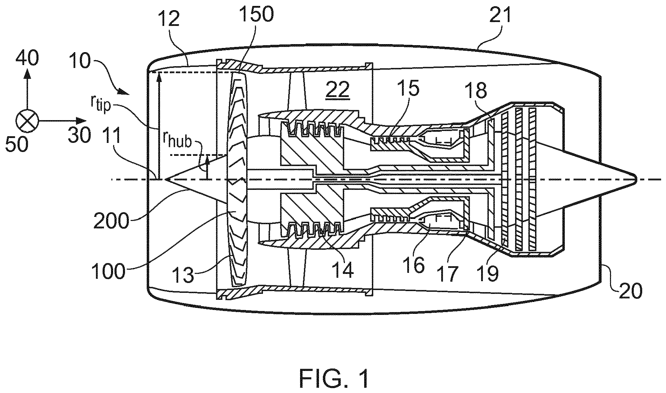

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

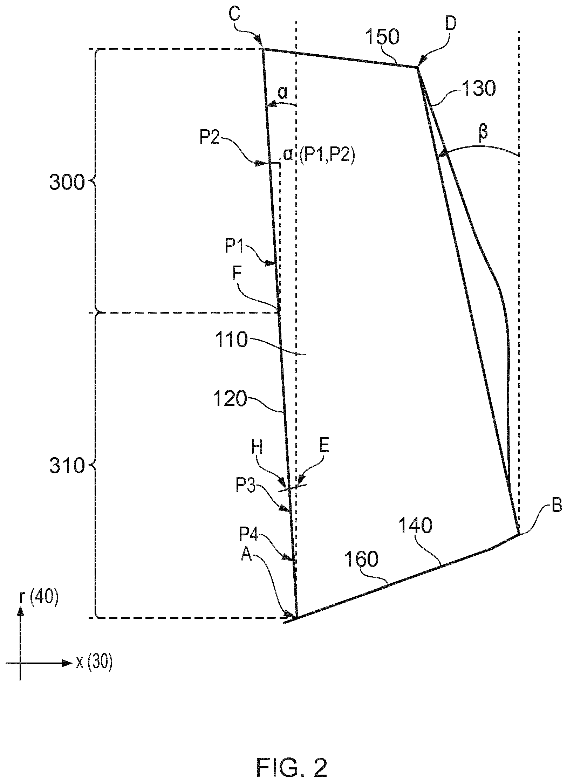

The gas turbine engine 10 and/or the fan stage 13 and/or the fan blades 100 of the fan stage 13 shown in Figure 1 may be in accordance with examples of the present disclosure, aspects of which are described by way of example only in relation to Figures 2 to 6.

Any gas turbine engine in accordance with the present disclosure (such as the gas turbine engine 10 of Figure 1) may, for example, have a specific thrust in the ranges described herein (for example less than 10) and/or a fan blade hub to tip ratio in the ranges described herein and/or a fan tip loading in the ranges described herein.

The present disclosure may relate to any suitable gas turbine engine. For example, other gas turbine engines to which the present disclosure may be applied may have related or alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan. The gas turbine engine shown in Figure 1 has a mixed flow nozzle 20, meaning that the flow through the bypass duct 22 and the flow through the core 15, 16, 17, 18, 19 are mixed, or combined, before (or upstream of) the nozzle 20). However, this is not limiting, and any aspect of the present disclosure may also, for example, relate to engines 10 having a split flow nozzle, which may mean that the flow through the bypass duct 22 has its own nozzle that is separate to and may be radially outside a core engine nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example.

The geometry of the gas turbine engine 10, and components thereof, is defined by a conventional axis system, comprising an axial direction 30 (which is aligned with the rotational axis 11), a radial direction 40, and a circumferential direction 50 (shown perpendicular to the page in the Figure 1 view). The axial, radial and circumferential directions 30, 40, 50 are mutually perpendicular.

The fan stage 13 comprises a plurality of fan blades 100 extending from a hub 200. The fan blades 100 may be defined with respect to the axial direction 30, radial direction 40, and circumferential direction 50 shown in Figure 1 in relation to the gas turbine engine 10.

In general, the fan stage 13 (which may be referred to simply as the fan 13) has a hub to tip ratio, which may be defined as the radius of the leading edge of the fan blades 100 at the point where they extend away from the hub 200 (labelled $r_{hub}$ in Figure 1) divided by the radius of the leading edge of the fan blades 100 at their tip 150 (labelled $r_{tip}$ in Figure 1). The hub to tip ratio ($r_{hub}$ / $r_{tip}$) may be in the ranges described and/or claimed elsewhere herein.

Figure 2 is a side view (that is, a view in the axial-radial plane) of a fan blade 100 in accordance with the present disclosure. The fan blade 100 has an aerofoil portion 110. The aerofoil portion 110 has a leading edge 120 and a trailing edge 130. The aerofoil portion 110 extends from a root 140 to a tip 150 in a substantially radial spanwise direction. The leading edge 120 may be defined as the line defined by the axially forwardmost points of the aerofoil portion 110 from its root 140 to its tip 150.

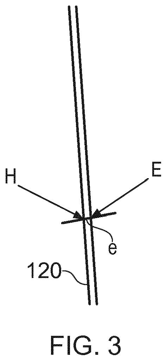

Various features of an exemplary fan blade 100 will now be described with reference to Figures 2 and 3. It will be appreciated that these features may be applied alone or in combination, as defined in the claims. The variables shown in Figures 2 and 3 are explained in the table below, where the term "LE" refers to the leading edge 120, and the term "TE" refers to the trailing edge 130:

| Point | Name | Definition |
|-------|------|------------|
| A | LE root | Leading edge 120 at the root 140 of the aerofoil 110 |
| B | TE root | Trailing edge 130 at the root 140 of the aerofoil 110 |
| C | LE tip | Leading edge 120 at the tip 150 of the aerofoil 110 |
| D | TE tip | Trailing edge 130 at the tip 150 of the aerofoil 110 |
| P1, P2 | LE points | Points on leading edge 120 with radii that are at least a percentage (for example 2% or 5%) of the aerofoil span apart, and between the radii of point F on the leading edge at 60% of the aerofoil span from the LE root A and LE Tip C e.g. $$\frac{|r_{P1}-r_{P2}|}{r_C-r_A} \geq e.g.\, 0.05 \; or \; 0.02 \; ; r_{P2} \geq r_{P1};$$ $r_A + 0.6(r_C - r_A) \leq r_{P1}, r_{P2} \leq r_C$ |
| P3, P4 | LE points | Points on leading edge 120 with radii that are at least a percentage (for example 2% or 5%) of the aerofoil span apart, and between the radii of the LE root A and the point F on the leading edge at 60% of the aerofoil span from the root A, e.g. $$\frac{|r_{P4}-r_{P3}|}{r_C-r_A} \geq 0.05 \; ; r_{P3} \geq r_{P4};$$ $r_A \leq r_{P3}, r_{P4} \leq r_A + 0.6(r_C - r_A)$ |
| E | Point on LE | Point on leading edge 120 with maximum perpendicular distance to the line AC |
| H | Point on AC | |
| e | Distance EH | $$e = \sqrt{(x_H - x_E)^2 + (r_H - r_E)^2}$$ |
| Alpha $\alpha$ | LE global slope | $$\propto = \frac{180}{\pi} atan\left(\frac{x_c - x_A}{r_c - r_A}\right)$$ |
| alpha (P1,P2) | LE local slope - radially outer half | $$\propto (P1, P2) = \frac{180}{\pi} atan\left(\frac{x_{P2} - x_{P1}}{r_{P2} - r_{P1}}\right)$$ |
| alpha (P3,P4) | LE local slope - radially inner half | $$\propto (P3, P4) = \frac{180}{\pi} atan\left(\frac{x_{P3} - x_{P4}}{r_{P3} - r_{P4}}\right)$$ |
| e% | LE "straightness" | $$e\% = \frac{e}{r_C - r_A} 100$$ |

(continued)

| Point | Name | Definition |
|-------|------|------------|
| Span | Aerofoil Span | Difference in the radius of the leading edge 120 at the root 140 and at the tip 150: $r_C$ - $r_A$ |
| F | Aerofoil span 60% point | Radius of the leading edge 120 at radial position 60% between root 140 and tip 150 from root 140: $r_A + 0.6$ ($r_C$ - $r_A$) |

Note in the above table, that "x" refers to a position in the axial direction 30 and "r" refers to a position in the radial direction 40.

For any two points P1, P2 on the leading edge that are in the region 300 that is the radially outer 40% of the blade span (i.e. radially outboard of the point F shown in Figure 2), for example radially closer to the leading edge tip C than to the leading edge root A, and are separated by at least 1%, for example at least 2%, for example at least 3%, for example at least 4%, for example at least 5% of the span, the radially outer point P2 is axially forward of the radially inner point P1. Such points P1, P2 may be described as being radially outside (or as having a greater radius than) the point F on the aerofoil that is 60% of the span from the leading edge root A.

For points P3, P4 that are on the leading edge that are in the region 310 that is the radially inner 60% of the blade span (i.e. radially inside of the point F shown in Figure 2), for example radially closer to the leading edge root A than to the leading edge tip C, and are separated by at least 1%, for example at least 2%, for example at least 3%, for example at least 4%, for example at least 5% of the span, the radially outer point P3 may either be axially forward (as in the Figure 2 example) or axially rearward of the radially inner point P4. Such points P3, P4 may be described as being radially inside (or as having a smaller radius than) the point F on the aerofoil that is 60% of the span from the leading edge root A. The leading edge 120 of the aerofoil 100 may have any desired shape in the region 310.

Optionally, the global slope oc of the aerofoil portion 110 of fan blades 100 as described and/or claimed herein, such as that shown by way of example in Figure 2, may be in the range of from -6° and -0.2°, for example within any of the ranges defined elsewhere herein. In this regard, the global slope oc may represent the angle formed between the radial direction and a straight line AC drawn between the leading edge point A at the root 140 and the leading edge point C at the tip 150.

The local slope $\propto$ ($P1$,$P2$) of the aerofoil portion 110 of fan blades 100 as described and/or claimed herein, such as that shown by way of example in Figure 2, is in the range of from -6° and 0°, for example within any of the ranges defined elsewhere herein. Optionally, the local slope $\propto$ ($P3$,$P4$) of the aerofoil portion 110 of fan blades 100 as described and/or claimed herein, such as that shown by way of example in Figure 2, may be in the range of from -6° and 0°, for example within any of the ranges defined elsewhere herein. In this regard, the local slope oc ($P1$,$P2$), $\propto$ ($P3$,$P4$) may represent the angle formed between the radial direction and a line drawn between any two points in the respective region of the leading edge that have a difference in radius of at least 1%, for example at least 2%, for example at least 3%, for example at least 4%, for example at least 5% of the blade span.

The relationship between 'E' and 'H' as defined in the table above is seen most easily in Figure 3. The distance 'e' between the points 'E' and 'H' may be said to represent the maximum perpendicular distance between any point on the leading edge and a straight line drawn between the leading edge at the root. As a percentage ('e%')the distance 'e' of the aerofoil portion 110 of fan blades 100 as described and/or claimed herein may be less than 5%, for example less than 2% (or any other range as described and/or claimed herein) of the span of the aerofoil portion 110. However, it will be appreciated that some arrangements of the present disclosure may have a relationship between 'E' and 'H' that is outside this range.

The trailing edge 130 of the aerofoil portion 110 may also define a global slope $\beta$. The global slope $\beta$ of the trailing edge 130 of fan blades 100 may be in the range of from -40° and 0°, for example -30° and -1°, for example -25°and -2.5°, for example -20° and -5°, for example -15°and -7.5°, for example around -10°. In this regard, the global slope $\beta$ of the trailing edge 130 may represent the angle between the radial direction and a straight line I drawn between a point B on the trailing edge 130 at the root 140 and a point D on the trailing edge 130 at the tip 150.

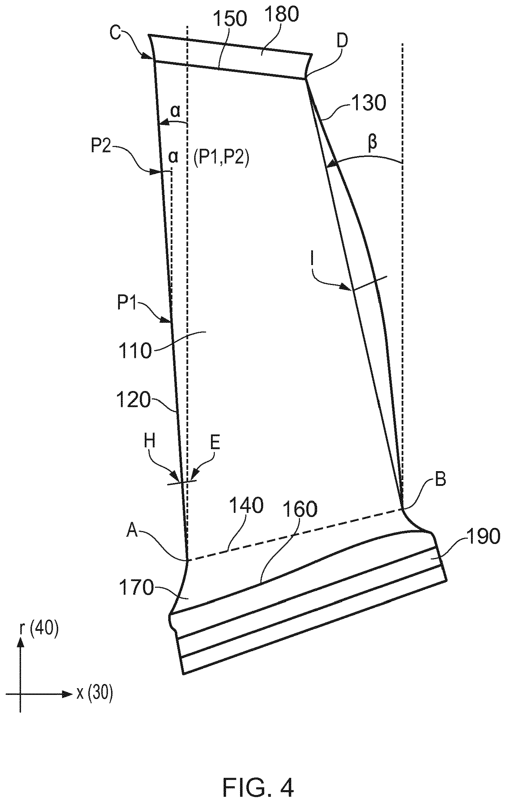

The fan blade 100 comprises a platform 160. The aerofoil portion 110 may extend directly from the platform 160, as in the Figure 2 example. Alternatively, as shown by way of example in Figure 4, a fan blade 100 may have a root portion 170. The root portion 170 may be said to extend between the platform 160 and the root 140 of the aerofoil portion 110. The radial extent of the root portion 170 may be no more than 7%, for example no more than 5%, of the span of the aerofoil portion 110.

Also as shown by way of example in Figure 4, the fan blade 100 may comprise a tip portion 180. The tip portion 180 may be said to extend from the tip 150 of the aerofoil portion 110. The radial extent of the tip portion 180 may be no more than 5% of the span of the aerofoil portion 110.

The fan blade 100 may be attached to the hub 200 in any desired manner. For example, the fan blade 100 may comprise a fixture 190 such as that shown by way of example in Figure 6 which may engage a corresponding slot in the hub (or disc). Purely by way of example, such a fixture may be in the form of a dovetail that may slot into and/or engage a corresponding slot in the hub/disc in order to fix the fan blade to the hub/disc.

Alternatively, the fan blade 100 and the hub 200 may be formed as a unitary part, with no mechanical and/or releasable connections, so as to form a unitary fan stage 13. Such a unitary fan stage 13 may be referred to as a "blisk". Such a unitary fan stage 13 may be manufactured in any suitable manner, for example by machining and/or by linear friction welding the fan blades 100 to the hub 200, or at least linear friction welding the aerofoil portions 110 to a hub 200 that includes radially inner stub portions of the fan blades 100.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

**Claims**

1. A fan stage for a gas turbine engine, the fan stage defining axial (30), radial (40) and circumferential (50) directions, the fan stage comprising a plurality of fan blades (100) extending from a hub (200), **characterized in that**:

   each fan blade comprises an aerofoil portion (110) having a leading edge (120) extending from a root (140) to a tip (150), the radial distance between the leading edge at the root (A) and the leading edge at the tip (C) defining a blade span;
   for any two points (P1, P2) on the leading edge (120) of a fan blade that are in the radially outer 40% of the blade span and are radially separated by at least 5% of the blade span, the radially outer of the two points is axially forward of the radially inner point;
   when viewed along a circumferential direction, the angle ($\alpha$ (P1, P2)) formed between the radial direction and a line drawn between the two points (P1, P2) on the leading edge (120) is in the range of from -6°and 0°, where a negative angle indicates that the respective line has an axial component that is in the same direction as the axial component of the direction from a trailing edge (130) to the leading edge (120) of the blade (100); and
   the radius of the leading edge (120) of a given fan blade (100) at the hub (200) divided by the radius of the leading edge of the fan blade (100) at the tip (150) is in the range of from 0.24 to 0.32.

2. A fan stage for a gas turbine engine according to claim 1, wherein:
   for any two points (P1, P2) on the leading edge (120) of the fan blade (100) that are radially closer to the tip (150) than to the root (140) and are radially separated by at least 5% of the blade span, the radially outer of the two points is axially forward of the radially inner point.

3. A fan stage according to claim 1 or claim 2, wherein for any two points (P1, P2) on the leading edge (120) of the fan blade (100) that are in the radially outer 40% of the blade span and have a difference in radius of at least 2% of the blade span, the radially outer of the two points is axially forward of the radially inner point.

4. A fan stage according to any one of the preceding claims, wherein for any two points (P1, P2) on the leading edge (120) of the fan blade (100) that are radially closer to the tip (150) than to the root (140) and have a difference in radius of at least 2% of the blade span, the radially outer of the two points is axially forward of the radially inner point.

5. A fan stage according to any one of the preceding claims, wherein for any two points (P1, P2) on the leading edge (120) of a fan blade (100) that are radially separated by at least 5% of the blade span, the radially outer of the two points is axially forward of the radially inner point.

6. A fan stage according to any one of the preceding claims, wherein, when viewed along a circumferential direction, the angle ($\alpha$) formed between the radial direction and a straight line (AC) drawn between the leading edge (120) at the root (140) and at the tip (150) of any given fan blade (100) is in the range of from -6°and -0.2°.

7. A fan stage according to any one of the preceding claims, wherein:
   the maximum perpendicular distance (e) between any point on the leading edge (120) of any given fan blade (100) and a straight line drawn between the leading edge (120) at the root (140) and at the tip (150) is 2% of the blade span.

8. A fan stage according to any one of the preceding claims, wherein each fan blade (100) comprises:

a platform (160); and

a root portion (170), wherein

the root portion (170) extends between the platform (160) and the root (140) of the aerofoil portion (110).

9. A fan stage according to claim 8, wherein the radial extent of the root portion (170) of each fan blade is no more than 7% of the span of the aerofoil portion (110).

10. A fan stage according to any one of the preceding claims, wherein each fan blade comprises a tip portion (180) that extends at least radially away from the tip (150) of the aerofoil portion (110), and wherein, optionally, the radial extent of the tip portion (180) of each fan blade is no more than 7% of the span of the aerofoil portion.

11. A fan stage according to any one of the preceding claims, wherein the aerofoil portion (110) of each fan blade has a trailing edge (130) extending from the root to the tip, wherein, when viewed along a circumferential direction the angle ($\beta$) formed between the radial direction and a straight line (BD) drawn between the trailing edge at the root and at the tip is in the range of from -20° and -5°, where a negative angle indicates that the respective line has an axial component that is in the same direction as the axial component of the direction from a trailing edge to the leading edge of the blade.

12. A gas turbine engine (10) comprising a fan stage according to any one of the preceding claims.

13. A gas turbine engine according to claim 12, further comprising:

a turbine; and

a gearbox, wherein:

the fan stage is driven from the turbine via the gearbox, in order to reduce the rotational speed of the fan stage compared with the driving turbine stage.

14. A gas turbine engine (10) according to claim 12 or claim 13 with a specific thrust of less than 100 N/Kg/s.


**Patentansprüche**

1. Lüfterstufe für ein Gasturbinentriebwerk, wobei die Lüfterstufe eine axiale (30), eine radiale (40) und eine Umfangsrichtung (50) definiert, wobei die Lüfterstufe eine Vielzahl von Lüfterschaufeln (100) umfasst, die sich von einer Nabe (200) erstrecken, **dadurch gekennzeichnet, dass**:

jede Lüfterschaufel einen Flügelabschnitt (110) mit einer Anströmkante (120) aufweist, die sich von einer Wurzel (140) zu einer Spitze (150) erstreckt, wobei der radiale Abstand zwischen der Anströmkante an der Wurzel (A) und der Anströmkante an der Spitze (C) eine Schaufelspannweite definiert; für zwei beliebige Punkte (P1, P2) an der Anströmkante (120) einer Lüfterschaufel, die sich in den radial äußeren 40 % der Schaufelspannweite befinden und radial durch mindestens 5 % der Schaufelspannweite getrennt sind, der radial äußere der beiden Punkte axial vor dem radial inneren Punkt ist;

gesehen entlang einer Umfangsrichtung der Winkel ($\alpha$ (P1, P2)), der zwischen der radialen Richtung und einer zwischen den zwei Punkten (P1, P2) an der Anströmkante (120) gezogenen Linie gebildet ist, im Bereich von -6° bis 0° ist, wobei ein negativer Winkel angibt, dass die jeweilige Linie eine axiale Komponente aufweist, die in die gleiche Richtung wie die axiale Komponente der Richtung von einer Hinterkante (130) zur Anströmkante (120) der Schaufel (100) gerichtet ist;

und der Radius der Anströmkante (120) einer gegebenen Lüfterschaufel (100) an der Nabe (200) geteilt durch den Radius der Anströmkante der Lüfterschaufel (100) an der Spitze (150) im Bereich von 0,24 bis 0,32 ist.

2. Lüfterstufe für ein Gasturbinentriebwerk nach Anspruch 1, wobei:

für zwei beliebige Punkte (P1, P2) an der Anströmkante (120) der Lüfterschaufel (100), die radial näher an der Spitze (150) als an der Wurzel (140) sind und radial durch mindestens 5 % der Schaufelweite getrennt sind, der radial äußere der zwei Punkte axial vor dem radial inneren Punkt ist.

3. Lüfterstufe nach Anspruch 1 oder Anspruch 2, wobei für zwei beliebige Punkte (P1, P2) an der Anströmkante (120) der Lüfterschaufel (100), die sich in den radial äußeren 40 % der Schaufelspannweite befinden und einen Radiusunterschied von mindestens 2 % der Schaufelspannweite aufweisen, der radial äußere der zwei Punkte axial vor dem radial inneren Punkt ist.

4. Lüfterstufe nach einem der vorherigen Ansprüche, wobei für zwei beliebige Punkte (P1, P2) an der Anströmkante (120) der Lüfterschaufel (100), die radial näher an der Spitze (150) als an der Wurzel (140) sind und einen Radiusunterschied von mindestens 2 % der Schaufelspannweite aufweisen, der radial äußere der zwei Punkte axial vor dem radial inneren Punkt ist.

5. Lüfterstufe nach einem der vorherigen Ansprüche, wobei für zwei beliebige Punkte (P1, P2) an der Anströmkante (120) einer Lüfterschaufel (100), die durch mindestens 5 % der Schaufelspannweite radial getrennt sind, der radial äußere der zwei Punkte axial vor dem radial inneren Punkt ist.

6. Lüfterstufe nach einem der vorherigen Ansprüche, wobei, wenn gesehen entlang einer Umfangsrichtung, der Winkel (α) der zwischen der radialen Richtung und einer zwischen der Anströmkante (120) an der Wurzel (140) und an der Spitze (150) einer beliebigen Lüfterschaufel (100) gezogenen Geraden (AC) gebildet ist, im Bereich von -6° bis -0,2° ist.

7. Lüfterstufe nach einem der vorherigen Ansprüche, wobei:
der maximale senkrechte Abstand (e) zwischen einem beliebigen Punkt an der Anströmkante (120) einer beliebigen Lüfterschaufel (100) und einer zwischen der Anströmkante (120) an der Wurzel (140) und an der Spitze (150) gezogenen Geraden 2 % der Schaufelspannweite ist.

8. Lüfterstufe nach einem der vorherigen Ansprüche, wobei jede Lüfterschaufel (100) Folgendes umfasst:
eine Plattform (160); und einen Wurzelabschnitt (170), wobei sich der Wurzelabschnitt (170) zwischen der Plattform (160) und der Wurzel (140) des Flügelabschnitts (110) erstreckt.

9. Lüfterstufe nach Anspruch 8, wobei die radiale Ausdehnung des Wurzelabschnitts (170) von jeder Lüfterschaufel nicht mehr als 7 % der Spannweite des Flügelabschnitts (110) ist.

10. Lüfterstufe nach einem der vorherigen Ansprüche, wobei jede Lüfterschaufel einen Spitzenabschnitt (180) umfasst, der sich mindestens radial weg von der Spitze (150) des Flügelabschnitts (110) erstreckt, und wobei optional die radiale Ausdehnung des Spitzenabschnitts (180) von jeder Lüfterschaufel nicht mehr als 7 % der Spannweite des Flügelabschnitts ist.

11. Lüfterstufe nach einem der vorherigen Ansprüche, wobei der Flügelabschnitt (110) von jeder Lüfterschaufel eine Abströmkante (130) aufweist, die sich von der Wurzel zu der Spitze erstreckt, wobei, wenn gesehen entlang einer Umfangsrichtung, der Winkel (β), der zwischen der radialen Richtung und einer zwischen der Abströmkante an der Wurzel und der Spitze gezogenen Geraden (BD) gebildet ist, im Bereich von -20° bis -5° ist, wobei ein negativer Winkel angibt, dass die jeweilige Linie eine axiale Komponente aufweist, die in der gleichen Richtung wie die axiale Komponente der Richtung von einer Abströmkante bis zur Anströmkante ist.

12. Gasturbinentriebwerk (10), umfassend eine Lüfterstufe nach einem der vorherigen Ansprüche.

13. Gasturbinentriebwerk nach Anspruch 12, ferner umfassend:
eine Turbine; und ein Getriebe, wobei:
die Lüfterstufe von der Turbine über das Getriebe angetrieben wird, um die Drehzahl der Lüfterstufe im Vergleich zu der Antriebsturbinenstufe zu reduzieren.

14. Gasturbinentriebwerk (10) nach Anspruch 12 oder Anspruch 13 mit einem spezifischen Schub von weniger als 100 N/kg/Sek.

**Revendications**

1. Étage de soufflante pour moteur à turbine à gaz, l'étage de soufflante définissant les directions axiale (30), radiale (40) et circonférentielle (50), l'étage de soufflante comprenant une pluralité de pales de soufflante (100) s'étendant à partir d'un moyeu (200), **caractérisé en ce que** :

chaque pale de soufflante comprend une partie profil aérodynamique (110) possédant un bord d'attaque (120) s'étendant à partir de l'emplanture (140) jusqu'à la pointe (150), la distance radiale entre le bord d'attaque au niveau de l'emplanture (A) et le bord d'attaque au niveau de la pointe (C) définissant une envergure de pale ; pour deux quelconques points (P1, P2) sur le bord d'attaque (120) d'une pale de soufflante qui sont dans les 40% radialement externe de l'envergure de pale et séparés radialement d'une distance supérieure ou égale à 5 % de l'envergure de pale, le point radialement externe parmi les deux points est axialement en avant du point radialement interne ;

selon une vue le long d'une direction circonférentielle, l'angle ($\alpha$(P1, P2)) formé entre la direction radiale et une ligne tracée entre les deux points (P1, P2) du bord d'attaque (120) est compris dans la plage allant de -6° à 0°, un angle négatif indique que la ligne respective possède une composante axiale qui est dans la même direction que la composante axiale de la direction allant du bord de fuite (130) au bord d'attaque (120) de la pale (100) ; et le rayon du bord d'attaque (120) d'une pale de soufflante donnée (100) au niveau du moyeu (200) divisé par le rayon du bord d'attaque de la pale de soufflante (100) au niveau de la pointe (150) étant dans la plage allant de 0,24 à 0,32.

2. Etage de soufflante pour moteur à turbine à gaz selon la revendication 1, pour deux quelconques points (P1, P2) du bord d'attaque (120) de la pale de soufflante (100) qui sont radialement plus proches de la pointe (150) que de l'emplanture (140) et qui sont séparés radialement d'une distance supérieure ou égale à 5 % de l'envergure de la pale, ledit point radialement externe parmi les deux points étant axialement en avant du point radialement interne.

3. Etage de soufflante selon la revendication 1 ou 2, pour deux points quelconques (P1, P2) sur le bord d'attaque (120) de la pale de soufflante (100) qui sont dans les 40 % radialement externe de l'envergue de pale et possèdent une différence de rayon supérieure ou égale à 2 % de l'envergue de la pale, ledit point radialement externe parmi les des deux points étant axialement en avant du point radialement interne.

4. Etage de soufflante selon l'une quelconque des revendications précédentes, pour deux quelconques points (P1, P2) sur le bord d'attaque (120) de la pale de soufflante (100) qui sont radialement plus proches de la pointe (150) que de l'emplanture (140) et possèdent une différence de rayon supérieure ou égale à 2 % de l'envergure de la pale, ledit point radialement externe parmi les deux points étant axialement en avant du point radialement interne.

5. Etage de soufflante selon l'une quelconque des revendications précédentes, pour deux quelconques points (P1, P2) sur le bord d'attaque (120) d'une pale de soufflante (100) qui sont radialement séparés d'une distance supérieure ou égale à 5 % de l'envergue de la pale, ledit point radialement externe parmi les deux points étant axialement en avant du point radialement interne.

6. Etage de soufflante selon l'une quelconque des revendications précédentes, selon une vue le long d'une direction circonférentielle, ledit angle ($\alpha$) formé entre la direction radiale et une ligne droite (AC) tracée entre le bord d'attaque (120) au niveau de l'emplanture (140) et au niveau de la pointe (150) d'une quelconque pale de soufflante donnée (100) étant compris dans la plage allant de -6° à -0,2°.

7. Etage de soufflante selon l'une quelconque des revendications précédentes, ladite distance perpendiculaire maximale (e) entre un quelconque point du bord d'attaque (120) d'une pale de soufflante donnée (100) et une ligne droite tracée entre le bord d'attaque (120) au niveau de l'emplanture (140) et au niveau de la pointe (150) étant égale à 2 % de l'envergure de pale.

8. Etage de soufflante selon l'une quelconque des revendications précédentes, chaque pale de soufflante (100) comprenant : une plate-forme (160) ; et une partie emplanture (170), ladite partie emplanture (170) s'étendant entre la plate-forme (160) et l'emplanture (140) de la partie profil aérodynamique (110).

9. Étage de soufflante selon la revendication 8, ladite étendue radiale de la partie emplanture (170) de chaque pale de soufflante étant inférieure ou égale à 7 % de l'envergure de la partie profil aérodynamique (110).

10. Etage de soufflante selon l'une quelconque des revendications précédentes, chaque pale de soufflante comprenant une partie pointe (180) qui s'étend au moins radialement en s'éloignant de la pointe (150) de la partie profil aérodynamique (110), et éventuellement l'étendue de la partie pointe (180) de chaque pale de soufflante étant inférieure ou égale à 7 % de l'envergure de la partie profil aérodynamique.

**11.** Etage de soufflante selon l'une quelconque des revendications précédentes, la partie profil aérodynamique (110) de chaque pale de soufflante possédant un bord de fuite (130) s'étendant de l'emplanture jusqu'à la pointe, selon une vue le long d'une direction circonférentielle, ledit angle (β) formé entre la direction radiale et une ligne droite (BD) tracée entre le bord de fuite au niveau de l'emplanture et au niveau de la pointe étant compris dans la plage allant de -20° à -5°, un angle négatif indiquant que la ligne respective possède une composante axiale qui est dans la même direction que la composante axiale de la direction allant du bord de fuite au bord d'attaque de la pale.

**12.** Moteur à turbine à gaz (10) comprenant un étage de soufflante selon l'une quelconque des revendications précédentes.

**13.** Moteur à turbine à gaz selon la revendication 12, comprenant en outre :

une turbine ; et une boîte d'engrenages,
ledit étage de soufflante étant entraîné depuis la turbine par l'intermédiaire de la boîte d'engrenages afin de réduire la vitesse de rotation de l'étage de soufflante par rapport à l'étage de turbine.

**14.** Moteur à turbine à gaz (10) selon la revendication 12 ou 13, avec une poussée spécifique inférieure à 100 N/Kg/s.

FIG. 1

FIG. 2

H     E

e

120

FIG. 3

FIG. 4

**EP 3 361 051 B1**

**REFERENCES CITED IN THE DESCRIPTION**

**Patent documents cited in the description**

- WO 2013150243 A
- US 6071077 A
- EP 2543818 A
- WO 2005088135 A
- EP 2037126 A